# EUROPEAN PATENT SPECIFICATION

(11) **EP 4 635 675 B1**
(45) Date of publication and mention of the grant of the patent: **28.10.2026**
(21) Application number: 25166717.6
(22) Date of filing: 27.03.2025
(51) Int. Cl.: B23Q 1/00, B23Q 16/10

(54) **ROTATION INDEXING DEVICE FOR MACHINE TOOL**
ROTATIONSINDEXIERUNGSVORRICHTUNG FÜR WERKZEUGMASCHINE
DISPOSITIF D'INDEXATION DE ROTATION POUR MACHINE-OUTIL

(30) Priority: 16.04.2024 JP 2024065900
(43) Date of publication of application: 22.10.2025
(73) Proprietor: Tsudakoma Kogyo Kabushiki Kaisha, Kanazawa-shi, Ishikawa-ken 921-8650 (JP)
(72) Inventor: ISHIZAKI, Junichiro, Kanazawa-shi, 921-8650 (JP); DETO, Ryota, Kanazawa-shi, 921-8650 (JP); SHIMIZU, Tatsuya, Kanazawa-shi, 921-8650 (JP)
(74) Representative: Zimmermann & Partner Patentanwälte mbB

(56) References cited:
- EP-A1- 3 287 233
- EP-B1- 3 475 029
- JP-A- 2009 018 392

## Description

### TECHNICAL FIELD

The present invention relates to a rotation indexing device for a machine tool, including: a frame having an accommodation hole formed to penetrate therethrough and configured to rotatably support a main shaft within the accommodation hole; a clamp disc assembled to the main shaft so as not to be relatively rotatable; and a clamp device configured to clamp the clamp disc in cooperation with the frame, in which the clamp device is configured to include a clamp piston pressed against the clamp disc and a housing configured to slidably guide the clamp piston in a clamping direction and provided to be attachable to and detachable from the frame in a state where the clamp piston is accommodated within the accommodation hole, and an operating fluid is supplied to a pressure chamber formed between the housing and the clamp piston in the clamp device.

### BACKGROUND ART

In machine tools, it is generally known to use a rotation indexing device configured such that a main shaft, to which a driven member, such as a circular table on which a workpiece is placed, is attached on one end side, is provided in a form of being rotatably supported with respect to a frame and is rotationally driven by a drive mechanism, and an angular position of the main shaft resulting from the rotational driving is clamped by a clamp device to index the angular position. Note that a clamp disc is attached to the main shaft so as not to be relatively rotatable, and the clamp device is configured to apply a clamping force to the main shaft in cooperation with a clamp surface formed on the frame by pressing a clamp piston against the clamp disc.

In addition, as a clamp device in such a rotation indexing device, Patent Literature 1 discloses a clamp device in which parts excluding a clamp disc are unitized, and the unitized parts are configured to be attachable to and detachable from a frame for maintenance and the like. Specifically, the clamp device is configured to include a clamp piston that is pressed against a clamp disc, and a housing (case member) configured to guide sliding of the clamp piston in a clamping direction (a direction in which the clamp piston applies a pressing force to the clamp disc). The housing is configured to be attached to the frame in a state where the clamp piston is accommodated within an accommodation hole formed to penetrate the frame, the main shaft being rotatably supported in the accommodation hole, and is also configured to be detachable from the frame.

Note that regarding the clamp device of the rotation indexing device, there are a hydraulic clamp device that uses operating oil as an operating fluid and a pneumatic clamp device that uses compressed air as the operating fluid. This also applies to the clamp device in which some parts are unitized (unit-type), such as the configuration of Patent Literature 1. For reference, it is determined which type of hydraulic clamp device or pneumatic clamp device will be used for the rotation indexing device, based on the magnitude of torque (clamping force) required for clamping and the equipment in the factory.

### CITATION LIST

### PATENT LITERATURE

Patent Literature 1: JP2009-018392A

The frame of the rotation indexing device is formed with a supply passage for supplying an operating fluid to a pressure chamber of the clamp device. The supply passage is generally formed such that its inner diameter differs when the clamp device is the hydraulic clamp device and when it is the pneumatic clamp device.

Specifically, when the clamp device is a pneumatic clamp device, as air, which is the operating fluid, is a compressible fluid, the air within a space, including the pressure chamber and the supply passage leading to the pressure chamber, is compressed as air is supplied, increasing its pressure and thereby achieving a desired clamping state. For this reason, in cases where the pressure chamber is the same, when the inner diameter of the supply passage is large (the volume of the space within the supply passage is large), the rate of increase in the pressure within the entire space slows down, resulting in a longer time to achieve the clamping state. That is, the responsiveness from the start of the supply of the operating fluid (air) to the point at which the clamping state is achieved decreases. Note that when the responsiveness is poor, there is a concern of adversely affecting processing efficiency or processing precision. Therefore, when the clamp device is a pneumatic clamp device, it is generally considered to design the inner diameter of the supply passage to be as small as possible, taking the responsiveness into consideration.

In contrast, when the clamp device is a hydraulic clamp device, oil, which is the operating fluid, is an incompressible fluid and does not increase the pressure to the level required to achieve the clamping state by accompanying compression like air, so the influence of the inner diameter of the supply passage on the responsiveness is minimal. That is, the hydraulic clamp device can achieve the desired responsiveness even if the inner diameter of the supply passage is large. Note that the hydraulic clamp device is often adopted when high clamping force is required. In addition, in the case of a hydraulic clamp device, the larger the inner diameter of the supply passage, the greater the pressure transmitted and the greater the clamping force obtained. Therefore, it is generally considered to design the inner diameter of the supply passage to be as large as possible.

Due to the above, in the related art, the supply passage formed in the frame is generally designed to have different inner diameters when the clamp device is a hydraulic clamp device and when it is a pneumatic clamp device. Accordingly, the frames are fabricated differently depending on whether the clamp device is a hydraulic clamp device or a pneumatic clamp device. Note that in a manufacturing factory where a number of rotation indexing devices are manufactured, fabricating the frames differently in this way increases the total manufacturing cost in terms of production compared to a case where there is only one type of frame (where the rotation indexing device to be manufactured adopts either a hydraulic clamp device or a pneumatic clamp device exclusively).

In addition, in the case of a rotation indexing device adopting a unit-type clamp device as described above, the clamp device is mounted later to the frame, so the frame is designed without including a part of the clamp device. However, even in this case, in the related art, the frame is fabricated differently, as in the rotation indexing device where the clamp device is incorporated into the frame from the beginning (a part of the frame constitutes a part of the clamp device). Accordingly, even when the rotation indexing device adopts a unit-type clamp device, the manufacturing factory similarly experiences an increase in manufacturing costs.

### SUMMARY

Accordingly, an object of the present is to provide a rotation indexing device having a configuration that can reduce the total manufacturing cost in terms of production in a manufacturing factory where a number of rotation indexing devices, which adopt a clamp device in which some parts are unitized, are manufactured, compared to the related art.

A preamble of the present invention is a rotation indexing device for a machine tool, including: a frame having an accommodation hole formed to penetrate therethrough and configured to rotatably support a main shaft within the accommodation hole; a clamp disc assembled to the main shaft so as not to be relatively rotatable; and a clamp device configured to clamp the clamp disc in cooperation with the frame, the clamp device is configured to include: a clamp piston pressed against the clamp disc; and a housing configured to slidably guide the clamp piston in a clamping direction and provided to be attachable to and detachable from the frame in a state where the clamp piston is accommodated within the accommodation hole, an operating fluid is supplied to a pressure chamber formed between the housing and the clamp piston in the clamp device.

In addition, the present invention is characterized in that the clamp device is a hydraulic clamp device that uses operating oil as the operating fluid or a pneumatic clamp device that uses compressed air as the operating fluid, and the frame is configured to allow both the hydraulic clamp device and the pneumatic clamp device to be attached thereto, and includes both an operating oil supply passage for supplying the operating oil to the hydraulic clamp device and a compressed air supply passage for supplying the compressed air to the pneumatic clamp device, as a supply passage separate from the operating oil supply passage.

According to the present invention, in a rotation indexing device where a unit-type clamp device is adopted, the frame is formed to include both an operating oil supply passage for a hydraulic clamp device and a compressed air supply passage for a pneumatic clamp device, so that the frame can be used in common in both cases where a hydraulic clamp device is adopted as a clamp device and where a pneumatic clamp device is adopted as a clamp device. As a result, in the manufacturing factory, there is no need to manufacture frames differently in response to the adopted clamp device, as in the related art. Therefore, from the perspective of total cost in terms of production, the manufacturing cost can be reduced to a level close to that of manufacturing only one type of frame.

### BRIEF DESCRIPTION OF DRAWINGS

FIG. 1 is a plan view showing a circular table device to which the present invention is applied.
FIG. 2 is a partial cross-sectional view taken along line A-A in FIG. 1.
FIG. 3 is an enlarged view of main parts of the cross-sectional view taken along line A-A in FIG. 1, in an example where a hydraulic clamp device is adopted.
FIG. 4 is an enlarged view of main parts of a cross-sectional view taken along line B-B in FIG. 1, in an example where a pneumatic clamp device is adopted.
FIG. 5 is an enlarged view of main parts of a cross-sectional view taken along line B-C-A in FIG. 1, in an example where another type of clamp device is adopted.

### DESCRIPTION OF EMBODIMENTS

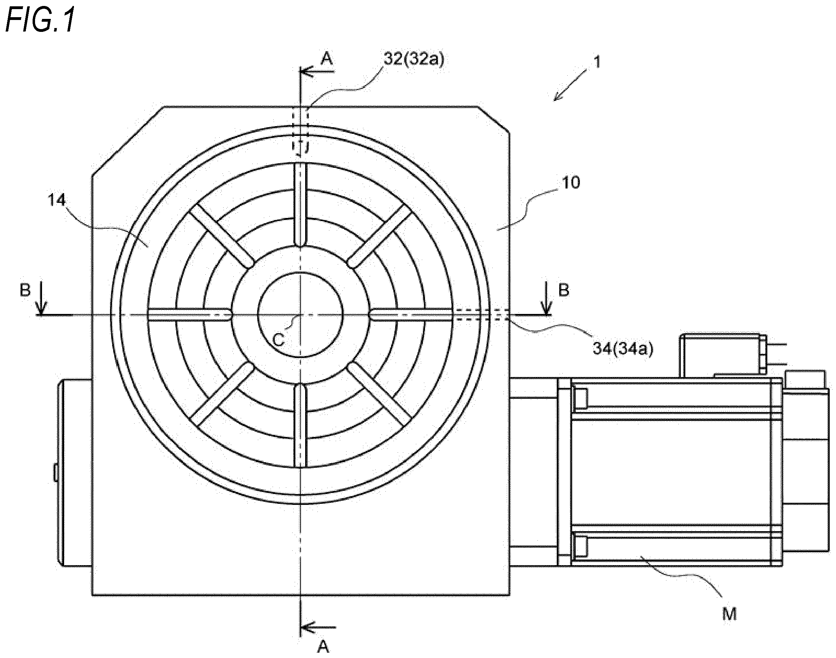

Hereinafter, an embodiment of a rotation indexing device for a machine tool according to the present invention will be described with reference to FIGS. 1 to 5. Note that the example described below is an example where the present invention is applied to a circular table device as a rotation indexing device. Note that the circular table device in the shown example is a so-called horizontal circular table device, which is installed with an axis line of a main shaft directed in a vertical direction.

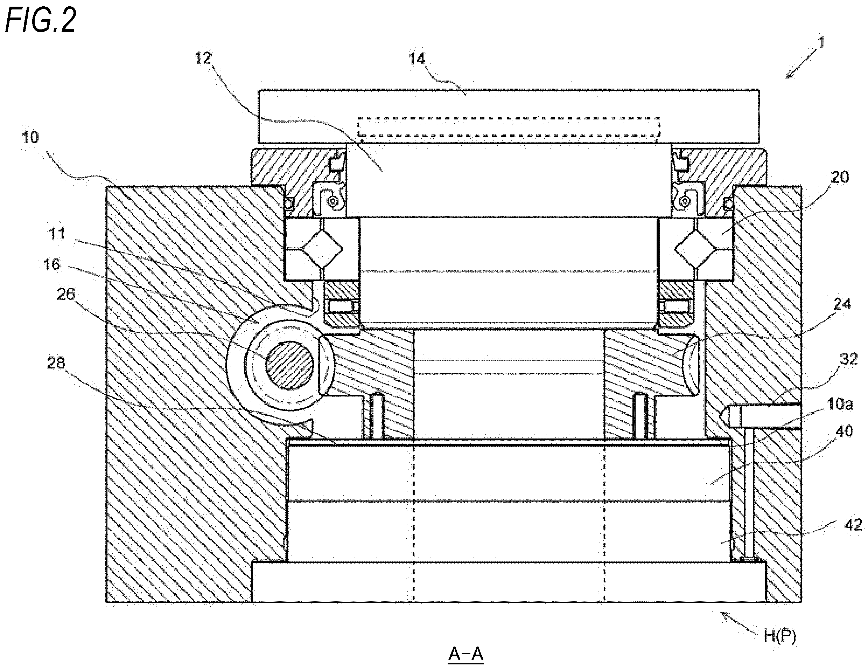

As shown in FIGS. 1 and 2, a circular table device 1 includes a frame 10 as a main body. In addition, the frame 10 is formed with an accommodation hole 11 penetrating from an upper surface toward a bottom surface. Additionally, in the circular table device 1, a main shaft 12 is rotatably supported with respect to the frame 10 via a bearing 20 within the accommodation hole 11. A disc-shaped circular table 14 to which a workpiece or the like is attached is fixed on one end side of the main shaft 12 (upper surface side of the frame 10).

In addition, the circular table device 1 includes a drive mechanism 16, using a drive motor M as a drive source, for rotationally driving the main shaft 12. Note that the drive motor M is provided in the form of being attached to a side of the frame 10, as shown in FIG. 1. Additionally, the drive mechanism 16 includes, as a drive transmission mechanism for transmitting rotation of an output shaft of the drive motor M to the main shaft 12, a worm gear mechanism including a worm wheel 24, to which the main shaft 12 is fixed, and a worm shaft 26, which includes a worm in mesh with the worm wheel 24 and is rotatably supported with respect to the frame 10 with an orientation in which an axis line is orthogonal to an axis line of the main shaft 12. The worm shaft 26 is connected to the output shaft of the drive motor M.

In addition, the circular table device 1 includes a clamp disc 28 for fixing an angular position of the main shaft 12 (circular table 14), which is rotationally driven and indexed by the drive mechanism 16, by being clamped through cooperation of the frame 10 and a clamp device described below. The clamp disc 28 is fixed to an end surface of the worm wheel 24 facing the bottom surface side of the frame 10 by a bolt or the like. Accordingly, the clamp disc 28 is assembled to the main shaft 12 via the worm wheel 24 so as not to be relatively rotatable.

Note that the clamp disc 28 has a diameter dimension such that, with respect to its radial direction, an outer peripheral edge is positioned close to an inner peripheral surface of the accommodation hole 11. On the one hand, the frame 10 has such a configuration that, with respect to the vertical direction, an upper part above a position where the clamp disc 28 is provided is formed to have a diameter smaller than that of a lower part below the position, and a step portion is thus formed in the accommodation hole 11. Accordingly, the clamp disc 28 faces a surface 10a of the step portion in the accommodation hole 11, which faces the bottom surface side, at a portion on the outer periphery side thereof.

A clamp piston in the clamp device is pressed against the clamp disc 28, and the clamp disc 28 is clamped by the surface 10a and the clamp piston, so that rotation of the clamp disc 28 is prevented. Accordingly, the surface 10a in the frame 10 becomes a clamp surface for clamping the clamp disc 28. The clamp disc 28 is clamped in this way, so that the angular position of the main shaft 12 is fixed.

Such a circular table device 1 includes, as the clamp device, a hydraulic clamp device that uses operating oil as an operating fluid, or a pneumatic clamp device that uses compressed air as the operating fluid. In addition, the clamp device, in the present invention, is structurally unitized and is adapted to be attachable to and detachable from the frame.

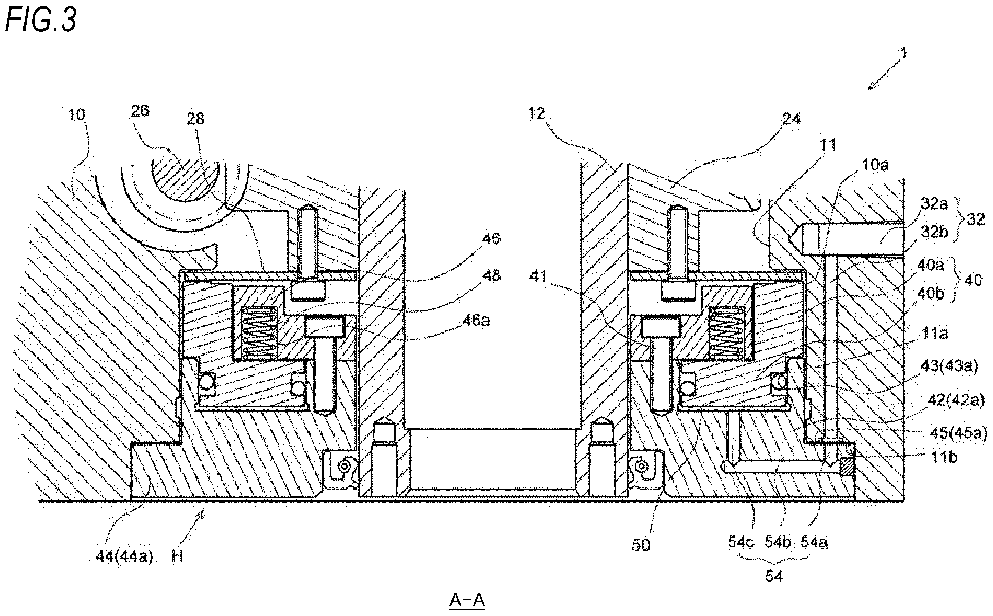

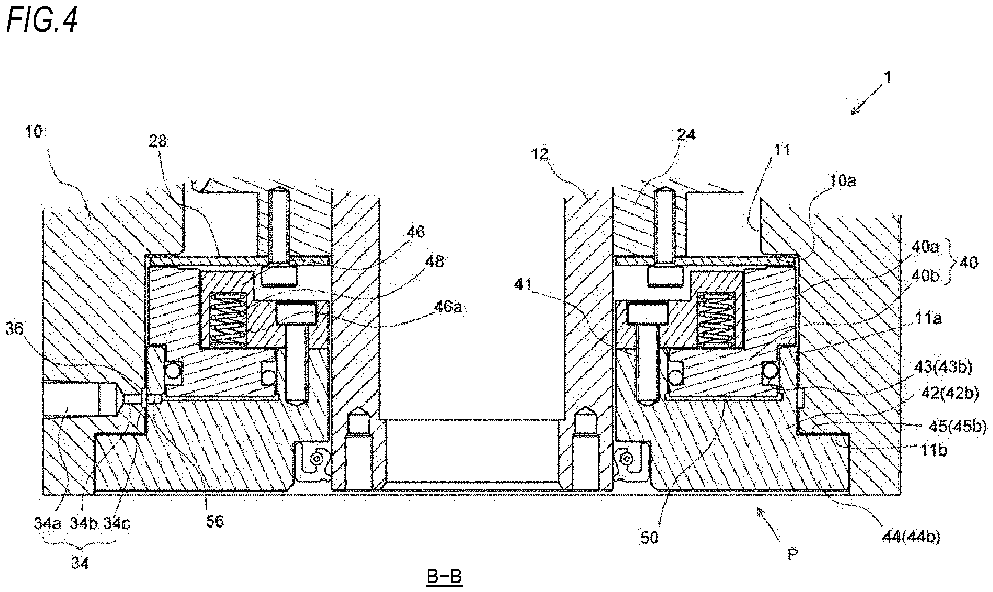

Below, each clamp device will be described in detail with reference to the drawings. Note that the device shown in FIG. 3 is a hydraulic clamp device H, and the device shown in FIG. 4 is a pneumatic clamp device P. However, in the present embodiment, as shown, both the clamp devices are configured to be identical in most parts. Therefore, in the following description, parts that are structurally identical will be described together, and in the drawings, the same symbols will be used for the parts.

A hydraulic clamp device H and a pneumatic clamp device P, as shown in FIGS. 3 and 4, include a housing member 42 serving as a base, a clamp piston 40 fitted and inserted into the housing member 42, a compression spring 48 that urges the clamp piston 40, and a support member 46 that supports the compression spring 48. Note that, in the present embodiment, it is assumed that the housing of the present invention is constituted by the housing member 42 and the support member 46.

Among them, the housing member 42 is configured as a cylindrical member having a through-hole at a center. Additionally, the housing member 42 is formed to have an outer diameter that is substantially the same as an inner diameter of a portion where the clamp disc 28 is positioned in the accommodation hole 11 of the frame 10. Note that the through-hole in the housing member 42 is formed as a hole whose inner diameter is slightly greater than an outer diameter of the main shaft 12.

Additionally, the housing member 42 has an annular groove 43 that is open to an end surface on one end side in an axis line direction and formed such that its center coincides with a center of the housing member 42 when viewed in the axis line direction. Note that the groove 43 is a groove (fitting groove) into which the clamp piston 40 is fitted and inserted. Additionally, the housing member 42 has a flange portion 44 formed on the other end side in the axis line direction in the form of protruding radially outward. Note that the accommodation hole 11 of the frame 10 is formed such that a diameter of a portion on the bottom surface side of the frame 10 is enlarged. Additionally, the flange portion 44 is formed such that its outer diameter is substantially the same as an inner diameter of the diameter-enlarged portion of the accommodation hole 11. For reference, in the shown example, a thickness dimension of the flange portion 44 is made slightly smaller than a vertical dimension of the diameter-enlarged portion of the accommodation hole 11.

In addition, the clamp piston 40 is also configured as a cylindrical member having a through-hole at a center. However, the clamp piston 40 has a disc-shaped guide portion 40b, which is a portion inserted into the fitting groove 43 of the housing member 42, and a pressure-contact portion 40a formed to protrude in a thickness direction from the guide portion 40b on an outer periphery side of the guide portion 40b. The clamp piston 40 is formed as a member in which the guide portion 40b and the pressure-contact portion 40a are integrally formed, and its cross section has an approximately L-shape. Additionally, the clamp piston 40 is provided in the form of being fitted and inserted into the fitting groove 43 of the housing member 42 at the guide portion 40b and being guided in a sliding manner in the axis line direction by the housing member 42.

Note that as for dimensions of the clamp piston 40 in the axis line direction, a thickness dimension of the guide portion 40b is set to be slightly smaller than a depth dimension of the fitting groove 43. Additionally, as for the pressure-contact portion 40a, a dimension in the protruding direction from the guide portion 40b is set to such a dimension that a distal end is positioned close to the clamp disc 28 in the state where the clamp device is provided to the circular table device 1.

In addition, the support member 46 is also configured as a cylindrical member having a through-hole at a center. Note that the through-hole in the support member 46 is formed such that its inner diameter is the same as that of the through-hole in the housing member 42. Additionally, the support member 46 is formed such that its outer diameter is substantially the same as an inner diameter of the pressure-contact portion 40a of the clamp piston 40.

Additionally, the support member 46 is arranged such that its center coincides with the center of the housing member 42 when viewed in the axis line direction, and is fixed to the housing member 42 with its end surface in contact with the end surface on one end side of the housing member 42. Note that the fixing is performed by a bolt 41 inserted into the support member and screwed into the housing member 42.

The support member 46 is fixed to the housing member 42 in this way, so that, in the clamp device, the bottom surface of the support member 46 (the end surface on the housing member 42 side) faces the guide portion 40b of the clamp piston 40 in the axis line direction, and the position of the guide portion 40b is regulated within the fitting groove 43 of the housing member 42 (the state in which the guide portion 40b is accommodated in the fitting groove 43 is maintained). Accordingly, the housing member 42, the support member 46, and the clamp piston 40 are combined such that they can be integrally handled, and the clamp device composed of those components is unitized.

Note that the pressure-contact portion 40a of the clamp piston 40 is formed into a shape where an outer diameter is enlarged from a position slightly spaced from the guide portion 40b to a distal end. Note that the outer diameter of the enlarged portion has substantially the same size as the outer diameter of a portion of the housing member 42 excluding the flange portion 44. The outer diameter is enlarged in this way, so that the pressure-contact portion 40a is shaped to have a step portion near the guide portion 40b.

In addition, the clamp piston 40 is formed such that a slight gap is present between the guide portion 40b and the support member 46 in the axis line direction in a state where an end surface of the step portion of the pressure-contact portion 40a facing the housing member 42 is in contact with the housing member 42. Thereby, the clamp piston 40 is provided to be capable of being displaced (slidable) in the axis line direction from the state where its end surface is in contact with the housing member 42.

In addition, the clamp piston 40 is formed such that a slight space is present between the guide portion 40b and the bottom surface of the fitting groove 43 of the housing member 42 in the state where its end surface is in contact with the housing member 42. Note that a space 50 between the guide portion 40b of the clamp piston 40 and the bottom surface of the fitting groove 43 of the housing member 42 is a space to which an operating fluid to push the clamp piston 40 toward the clamp disc 28 is supplied via a supply passage and the like described below. Therefore, the space 50 is a space that becomes a pressure chamber in the clamp device.

In addition, the support member 46 is formed with a plurality of bottomed holes 46a, which are open to the bottom surface and spaced at equal intervals in a circumferential direction of the support member 46. In each of the holes 46a, a compression spring 48 is provided. Thereby, the clamp piston 40 is constantly urged toward the housing member 42 by the plurality of compression springs 48, and the end face of the pressure-contact portion 40a is in contact with the housing member 42. Note that the number of compression springs 48 is larger in the hydraulic clamp device H than in the pneumatic clamp device P.

According to the clamp device (hydraulic clamp device H, pneumatic clamp device P) as described above, from the relationship between the outer diameters of the housing member 42 and the clamp piston 40 in the clamp device as described above and the inner diameter of the accommodation hole 11 in the frame 10, the clamp device can be inserted and installed into the frame 10 (accommodation hole 11) in a state where outer peripheral surfaces of the housing member 42 and the clamp piston 40 are in contact (sliding contact) with an inner peripheral surface 11a of the accommodation hole 11. In addition, in the circular table device 1, either the hydraulic clamp device H or the pneumatic clamp device P is inserted and installed into the accommodation hole 11 of the frame 10 and is attached to the frame 10 (attached state).

Note that in the attached state, the clamp device is in a state where an end surface 45 of the flange portion 44 of the housing member 42, which faces the clamp piston 40, is in contact with an end surface 11b of the diameter-enlarged portion of the accommodation hole 11, which faces the bottom surface of the frame 10. In addition, the attached state is fixed by a bolt inserted into a hole drilled in the thickness direction of the flange portion 44 and screwed into the frame 10. In the attached state, the distal end of the pressure-contact portion 40a of the clamp piston 40 is positioned close to the clamp disc 28. In addition, since the thickness dimension of the flange portion 44 is the size as described above, in the attached state, the clamp device is in a state where the bottom surface of the housing member 42 (flange portion 44) is positioned in the accommodation hole 11 (a state where it is positioned slightly inward of the bottom surface of the frame 10).

In the circular table device 1 as a rotation indexing device for a machine tool described above, according to the present invention, the circular table device 1 is configured such that the frame 10 has both an operating oil supply passage 32 for supplying operating oil to the hydraulic clamp device H and a compressed air supply passage 34 for supplying compressed air to the pneumatic clamp device P as a supply passage separate from the operating oil supply passage 32. An embodiment (embodiment) of the circular table device 1 according to the present invention will be described in detail below.

First, in the clamp device, a communication passage for supplying an operating fluid to the pressure chamber 50 by pushing and moving the clamp piston 40 toward the clamp disc 28 is formed in the housing member 42. Specifically, in the hydraulic clamp device H, as shown in FIG. 3, a communication passage 54 is composed of a partial flow passage 54a, which is open to an end surface 45a of a flange portion 44a of a housing member 42a and extends in a thickness direction of the flange portion 44a, a partial flow passage 54c, which is open to a bottom surface of a fitting groove 43a in the housing member 42a for forming the pressure chamber 50 and extends parallel to the partial flow passage 54a, and a partial flow passage 54b, which extends radially to communicate the partial flow passage 54a and the partial flow passage 54c.

On the other hand, in the pneumatic clamp device P, as shown in FIG. 4, a communication passage 56 is formed to be open to an outer peripheral surface of a housing member 42b, to extend radially, and to be open to an inner surface on an outer side of a fitting groove 43b of the housing member 42b. However, the communication passage 56 is formed to be open to the fitting groove 43b at a position as close as possible to a bottom surface of the fitting groove 43b in the vertical direction of the frame 10 (in the depth direction of the fitting groove 43b). Note that the communication passage 56 in the pneumatic clamp device P is formed in plurality (e.g., four) spaced apart in the circumferential direction of the housing member 42b.

In addition, the frame 10 of the circular table device 1 is provided with the operating oil supply passage 32 formed to communicate with the communication passage 54 (to supply the operating oil to the communication passage 54) in a state where the hydraulic clamp device H serving as a clamp device is attached to the frame 10, and the compressed air supply passage 34 formed to communicate with the communication passage 56 (to supply the compressed air to the communication passage 56) in a state where the pneumatic clamp device H serving as a clamp device is attached to the frame 10.

Of the two, the operating oil supply passage 32 is composed of an operating oil inlet 32a to which an operating oil supply device is connected, and a communication passage 32b for communicating the operating oil inlet 32a and the hydraulic clamp device H. As shown in FIG. 3, the operating oil inlet 32a is formed to be open to a side of the frame 10 and to be directed toward the center of the accommodation hole 11 in the radial direction. Additionally, the operating oil inlet 32a is formed to extend to a position where it overlaps the diameter-enlarged portion of the accommodation hole 11 in the radial direction. The communication passage 32b is formed to extend in the vertical direction of the frame 10 and to be open to the end surface 11b of the diameter-enlarged portion of the accommodation hole 11. Note that the position of the operating fluid supply passage 32 in the circumferential direction of the accommodation hole 11 (frame 10) is set to such a position that, in a state where the hydraulic clamp device H is attached to the frame 10 with a predetermined phase, the communication passage 32b communicates with the partial flow passage 54a of the communication passage 54 in the hydraulic clamp device H .

In addition, the compressed air supply passage 34 is composed of a compressed air inlet 34a to which a compressed air supply device is connected, an annular groove 34c for forming an annular flow passage 36 with which the communication passage 56 in the pneumatic clamp device P directly communicates, and a communication passage 34b that communicates the compressed air inlet 34a and the annular groove 34c. Among them, the annular groove 34c is formed to be open to the inner peripheral surface of the accommodation hole 11 and to span the entire circumference. Accordingly, the pneumatic clamp device P is attached to the frame 10, so that the annular flow passage 36 is formed by the annular groove 34c and the outer peripheral surface of the housing member 42b.

Note that the annular groove 34c has a groove width (dimension in the vertical direction) larger than a diameter of the communication passage 56. Additionally, the annular groove 34c is formed at a height position where, in the vertical direction, the position of the communication passage 56 is within its existence range when the pneumatic clamp device P is attached to the frame 10. Accordingly, when the pneumatic clamp device P is attached to the frame 10, the annular path 36 formed by the annular groove 34c and the communication passage 56 in the pneumatic clamp device P are in direct communication with each other.

In addition, as shown in FIG. 4, the compressed air inlet 34a is formed to be open to a side of the frame 10 and to be directed toward the center of the accommodation hole 11 in the radial direction. However, as shown in FIG. 1, the compressed air inlet 34a is formed to be open to a side different from the side to which the operating oil inlet 32a is open. In addition, the compressed air inlet 34a is formed at a position where its center, when viewed in the radial direction, coincides with the center of the annular groove 34c. Additionally, the compressed air inlet 34a and the annular groove 34c (annular flow passage 36) are enabled to communicate with each other by the communication passage 34b extending in the radial direction.

In the case where the hydraulic clamp device H is adopted as a clamp device in the circular table device 1 having the frame 10 according to the configuration described above, the hydraulic clamp device H is attached to the frame 10 with a predetermined phase as described above. In a state where the hydraulic clamp device H is attached, as described above, the communication passage 54 (partial flow passage 54a) of the hydraulic clamp device H and the communication passage 32b of the operating oil supply passage 32 in the frame 10 are in communication, so the operating oil inlet 32a of the operating oil supply passage 32 and the communication passage 54 are in communication. That is, the hydraulic clamp device H and the operating oil supply passage 32 in the frame 10 are in communication.

On the other hand, when the pneumatic clamp device P is adopted as a clamp device, the pneumatic clamp device P is attached to the frame 10. In a state where the pneumatic clamp device P is attached, as described above, the communication passage 56 of the pneumatic clamp device P and the annular flow passage 36 formed by the annular groove 34c of the compressed air supply passage 34 in the frame 10 are in direct communication, so the compressed air inlet 34a of the compressed air supply passage 34 and the communication passage 56 are in communication. That is, the pneumatic clamp device P and the compressed air supply passage 34 in the frame 10 are in communication.

In this way, according to the circular table device 1 of the present embodiment, since the frame 10 has both the operating oil supply passage 32 for the hydraulic clamp device H and the compressed air supply passage 34 for the pneumatic clamp device P, the frame 10 can be used in common in both cases where the hydraulic clamp device H is adopted as a clamp device and where the pneumatic clamp device P is adopted as a clamp device. Thereby, in a manufacturing factory where a plurality (different types) of circular table devices 1 are manufactured, there is no need to manufacture the frames 10 differently in response to the adopted clamp device, resulting in a reduction in the total manufacturing cost.

Note that the present invention is not limited to the embodiment described above (the above embodiment), and can also be implemented in the following modified embodiments (1) to (5).
(1) The above embodiment is an example of the configuration of the frame 10 (operating fluid supply passage 32, compressed air supply passage 34) in the case where a so-called constant unclamp-type clamp device, which is configured such that the clamp piston 40 is moved toward the clamp disc 28 by supplying the operating fluid to the pressure chamber 50 during clamping, and the return movement of the clamp piston 40 toward the housing member 42 to bring it into an unclamped state is performed by the compression spring 48, is adopted as a clamp device. However, the present invention is not limited to the circular table device adopting a clamp device configured in this manner, and is applicable to a circular table device adopting a clamp device of a different type.

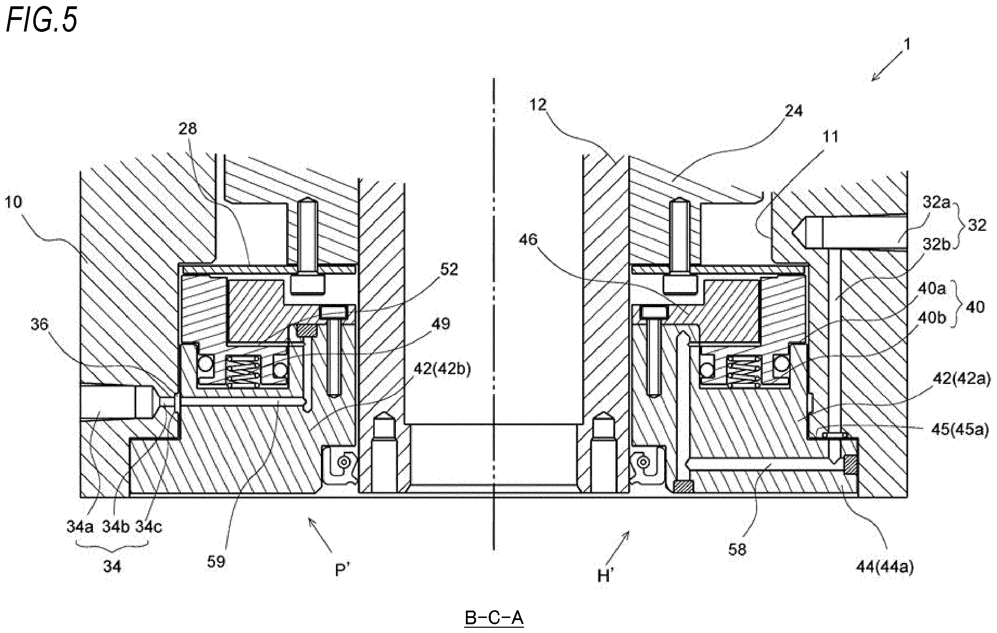

For example, FIG. 5 shows an example where the present invention is applied to a circular table device 1 that adopts, as a clamp device, a so-called constant clamp-type clamp device in which the clamp piston 40 is constantly urged toward the clamp disc 28 by a compression spring 49, and the clamp piston 40 is moved back toward the housing member 42 by supplying the operating fluid to a pressure chamber 52. Note that in FIG. 5, a hydraulic clamp device H' is shown on the right half and a pneumatic clamp device P' is shown on the left half. In addition, in FIG. 5, the operating oil supply passage 32 for supplying operating oil to the hydraulic clamp device H' and the compressed air supply passage 34 for supplying compressed air to the pneumatic clamp device P' in the frame 10 are shown on the same plane, but actually, the operating oil supply passage 32 and the compressed air supply passage 34 are formed with a phase difference of 90° around a central axis C of the accommodation hole 11, as in the above embodiment.

As for the configuration of both the clamp devices, the clamp piston 40 is configured such that the compression spring 49 for urging the clamp piston 40 is mounted between the housing member 42 and the clamp piston 40. In addition, the clamp piston 40 is formed such that, in the axis line direction, a slight space is present between the guide portion 40b and the support member 46 (which is a part of the housing in the present invention) in a state where the distal end of the pressure-contact portion 40a is in contact with the clamp disc 28. In the clamp device, the space becomes the pressure chamber 52.

In addition, in the hydraulic clamp device H', a communication passage 58 is formed to communicate with the pressure chamber 52 and, on the supply side, to be open to the end surface 45a of the flange portion 44a of the housing member 42a at a position where it is in communication with the operating fluid supply passage 32 (communication passage 32b) as in the above embodiment. In addition, in the pneumatic clamp device P', a communication passage 59 is formed to communicate with the pressure chamber 52 and, on the supply side, to be open to the outer peripheral surface of the housing member 42b at a position where it communicates with the compressed air supply passage 34 (annular groove 34c (annular flow passage 36)). As a result, by configuring the frame 10 in the same manner as in the above embodiment, the frame 10 can be used in common in both the cases where the hydraulic clamp device H' is adopted as a clamp device and where the pneumatic clamp device P' is adopted as a clamp device.

In addition, the clamp device adopted may also be of a type in which both the forward movement and the return movement of the clamp piston are performed by the supply of an operating fluid, in addition to the type described above, that is, the type in which one of the forward movement and the return movement of the clamp piston is performed by the compression spring. In this case, the communication passages 54 and 58 shown in FIGS. 3 and 5 are formed for the hydraulic clamp device, the communication passages 56 and 59 shown in FIGS. 4 and 5 are formed for the pneumatic clamp device, and the frame is formed with two operating oil supply passages corresponding to the hydraulic clamp device and two compressed air supply passages corresponding to the pneumatic clamp device. However, in this case, the two operating oil supply passages are formed at positions with different phases, and the two compressed air supply passages are formed at different vertical positions with different phases.

In addition, in the above description, examples have been described in which the clamp device (hydraulic clamp device, pneumatic clamp device) of the same type (constant unclamp-type, constant clamp-type, type (non-constant type) in which both clamping and unclamping are performed by supplying an operating fluid) is adopted, but the present invention is also applicable to cases in which clamp devices of different types are adopted, in hydraulic and pneumatic types. Note that in the case where a constant unclamp type is adopted for one of a hydraulic clamp device and a pneumatic clamp device and a constant clamp type is adopted for the other, as described above, the frame itself is configured with supply passages (operating oil supply passage and compressed air supply passage) in the same manner as in the case where both types of the clamp devices adopt a constant unclamp type or a constant clamp type. However, on the other hand, in the case where the non-constant type is adopted for one and a constant unclamp type or a constant clamp type is adopted for the other, the frame is configured such that the operating oil supply passage and the compressed air supply passage are formed in different numbers (one has two and the other has one).

Note that the clamp device, particularly the pneumatic clamp device, is not limited to being configured to have one pressure chamber for performing the forward movement of the clamp piston by compressed air as described above, and a clamp device configured to have two pressure chambers can also be adopted as the clamp device of the present invention. In the case where such a pneumatic clamp device is adopted, for example, even for a constant unclamp type, the frame is formed with two compressed air supply passages so as to communicate with each pressure chamber, corresponding to the clamp device.

(2) As for the operating oil supply passage and compressed air supply passage in the frame, in the example described above, as for the operating oil supply passage 32, as the hydraulic clamp device H (H'), the clamp device is adopted in which the communication passage 54 (58) is open to the end surface 45a of the flange portion 44a of the housing member 42a, and the operating oil supply passage 32 is formed in such a form that it is open to the end surface 11b of the diameter-enlarged portion of the accommodation hole 11 (frame 10), facing the end surface 45a of the flange portion 44a. In addition, as for compressed air supply passage 34, as the pneumatic clamp device P (P'), the clamp device is adopted in which the communication passage 56 (59) is open to the outer peripheral surface of the housing member 42b, and the compressed air supply passage 34 is formed in such a form that it is open to the inner peripheral surface of the accommodation hole 11 (frame 10), facing the outer peripheral surface of the housing member 42b.

However, since the rotation indexing device to which the present invention is applied is not limited to those to which the clamp device described in the above embodiment is applied, the operating oil supply passage and the compressed air supply passage are also formed in the frame in accordance with the clamp device adopted.

For example, in the case where a hydraulic clamp device is adopted in which a communication passage is formed to be open to the outer peripheral surface of the housing member 42b, as in the pneumatic clamp device P shown in FIG. 4, the operating oil supply passage is formed to be open to the inner peripheral surface of the accommodation hole 11 (frame 10), facing the outer peripheral surface of the housing member 42b, as in the compressed air supply passage 34. In addition, in the case where a pneumatic clamp device is adopted in which a communication passage is formed to be open to the flange portion 44a of the housing member 42a, as in the hydraulic clamp device H shown in FIG. 3, the compressed air supply passage is formed to be open to the end surface 11b of the diameter-enlarged portion of the accommodation hole 11 (frame 10), facing the end surface 45a of the flange portion 44a, as in the operating oil supply passage 32.

(3) As for the clamp device, in the above embodiment, the hydraulic clamp device and the pneumatic clamp device adopted for the common frame are substantially the same in terms of each component, such as the housing member and the clamp piston, and the combination thereof, except for the communication passage for the operating fluid. However, in the rotation indexing device of the present invention, the hydraulic clamp device and the pneumatic clamp device adopted for the common frame need not be structurally identical.

Note that as the clamp device to be adopted, various known clamp devices are considered, such as those having different housing configurations and piston guiding configurations. However, even if the hydraulic clamp device and the pneumatic clamp device are structurally different, in the present invention, since the frame is used in common for both the clamp devices, the outer diameter of the portion (portion that comes into contact with the inner peripheral surface of the accommodation hole), which is fitted into the accommodation hole of the frame, needs to be the same (substantially the same as the inner diameter of the accommodation hole) in both the clamp devices (mainly the housing).

In addition, in the case where the housings of both the clamp devices have flange portions, when adopting clamp devices that are structurally different as described above, it is also considered that the outer diameters of the flange portions in the two clamp devices are different. Therefore, in this case, the outer diameter of the flange portion of at least one clamp device becomes smaller than the inner diameter of the diameter-enlarged portion of the accommodation hole. However, as for the outer diameter of the flange portion, any size is acceptable as long as it does not interfere with the formation of the supply passage, and the like.

Note that, in the case where the outer diameter of the flange portion is smaller than the inner diameter of the diameter-enlarged portion of the accommodation hole, a gap is present between the frame (inner peripheral surface of the diameter-enlarged portion) and the flange portion (outer peripheral surface). However, there is no particular issue if there is no problem in the use of the device (for example, if cutting oil can be prevented from entering the frame depending on the method of installing the sealing member, and the like). Additionally, the gap may be filled with a separate member (a ring-shaped adapter).

In addition, in the case where the circular table device to which the present invention is applied is a so-called horizontal circular table device, which is installed with an axis line of a main shaft directed in a horizontal direction, the accommodation hole of the frame may not have the diameter-enlarged portion, and the clamp device may be provided in a form in which the flange portion is positioned on the outer side of the frame. In this case, the frame can be used in common for both clamp devices without particularly considering the size relationship between the accommodation hole of the frame and the flange portion as described above.

In addition, as for the thickness dimension of the flange portion, as described above, when the circular table device to which the present invention is applied is a horizontal circular table device, the thickness dimension need not be the same in both clamp devices. Additionally, the thickness dimension may be such that, even in a circular table device configured such that the accommodation hole of the frame has a diameter-enlarged portion and the flange portion of each of both clamp devices is positioned within the diameter-enlarged portion, a part of the flange portion of one or both clamp devices may protrude from the frame while each clamp device is attached to the frame.

(4) In the above embodiment, the circular table device 1 includes the drive mechanism 16 for rotationally driving the main shaft 12, and the drive mechanism 16 includes, as a drive transmission mechanism for transmitting the rotation of the output shaft of the drive motor M serving as a drive source to the main shaft 12, the worm gear mechanism including the worm wheel 24, to which the main shaft 12 is fixed, and the worm shaft 26, which includes a worm in mesh with the worm wheel 24. However, the drive mechanism is not limited to such a configuration.

For example, the drive mechanism may adopt, as the drive transmission mechanism, a so-called roller gear cam mechanism configured to include a roller gear where a main shaft is fixed and a plurality of rollers are arranged in a circumferential direction, and a roller camshaft having a spiral cam groove with which the roller gear is in mesh. In addition, as the drive transmission mechanism, a so-called ball drive mechanism (ball reduction gear) may be adopted in which a worm wheel and a worm are indirectly engaged via a ball serving as an engaging member. In addition, the drive mechanism may include, as a drive source, a direct drive motor (DD motor), which directly rotationally drives the main shaft without a driving transmission mechanism being involved.

(5) As for the rotation indexing device for a machine tool to which the present invention is applied, in the example described above, the rotation indexing device is a so-called single-shaft circular table device where there is only a single rotary shaft (main shaft) and rotation indexing is performed around the rotary shaft. However, the present invention can also be applied to each indexing unit in a so-called double-shaft circular table device (tilting circular table device) including a rotation indexing unit with a main shaft as a rotary shaft for rotationally driving a circular table to which a workpiece or the like is attached, and a tilting indexing unit with a main shaft as a tilting shaft for supporting and tilting the rotation indexing unit. In addition, the present invention is not limited to application to the single-shaft or double-shaft circular table device, and can also be applied to, for example, an angular indexing unit (rotation indexing device) of a so-called milling head configured to index an angular position of a spindle supported by a support shaft serving as a main shaft around an axis line of the support shaft.

### REFERENCE SIGNS LIST

1: circular table device, 10: frame, 10a: surface, 11: accommodation hole, 11a: inner peripheral surface, 11b: end surface, 12: main shaft, 14: table, 16: drive mechanism, 20: bearing, 24: worm wheel, 26: worm shaft, 28: clamp disc, 32: operating oil supply passage, 32a: operating oil inlet, 32b: communication passage, 34: compressed air supply passage, 34a: compressed air inlet, 34b: communication passage, 34c: annular groove, 36: annular flow passage, 40: clamp piston, 40a: pressure-contact portion, 40b: guide portion, 41: bolt, 42, 42a, 42b: housing member, 43, 43a, 43b: fitting groove, 44, 44a, 44b: flange portion, 45, 45a: end surface, 46: support member, 46a: hole, 48, 49: compression spring, 50, 52: pressure chamber, 54, 56, 58, 59: communication passage, 54a, 54b, 54c: partial flow passage, H, H': hydraulic clamp device, P, P': pneumatic clamp device

## Claims

1. A rotation indexing device (1) for a machine tool, comprising:
a frame (10) having an accommodation hole (11) formed to penetrate therethrough and configured to rotatably support a main shaft (12) within the accommodation hole;
a clamp disc (28) assembled to the main shaft so as not to be relatively rotatable; and
a clamp device configured to clamp the clamp disc in cooperation with the frame, the clamp device is configured to include:
a clamp piston (40) pressed against the clamp disc (28); and
a housing (42, 46) configured to slidably guide the clamp piston (40) in a clamping direction and provided to be attachable to and detachable from the frame (10) in a state where the clamp piston (40) is accommodated within the accommodation hole (11), an operating fluid is supplied to a pressure chamber (50, 52) formed between the housing and the clamp piston in the clamp device,
wherein the clamp device is a hydraulic clamp device (H, H') that uses operating oil as the operating fluid or a pneumatic clamp device (P, P') that uses compressed air as the operating fluid, and
**characterized in that**
the frame (10) is configured to allow both the hydraulic clamp device and the pneumatic clamp device to be attached thereto, and includes both an operating oil supply passage (32) for supplying the operating oil to the hydraulic clamp device and a compressed air supply passage (34) for supplying the compressed air to the pneumatic clamp device, as a supply passage separate from the operating oil supply passage.

## Patentansprüche

1. Rundschalttischvorrichtung (1) für eine Werkzeugmaschine, umfassend:
einen Rahmen (10), der ein Aufnahmeloch (11) aufweist, das ausgebildet ist, diesen zu durchdringen, und konfiguriert ist, um eine Hauptwelle (12) innerhalb des Aufnahmelochs drehbar zu lagern;
eine Klemmscheibe (28), die an der Hauptwelle montiert ist, um nicht relativ drehbar zu sein; und
eine Klemmvorrichtung, die konfiguriert ist, um die Klemmscheibe im Zusammenwirken mit dem Rahmen zu klemmen, wobei die Klemmvorrichtung konfiguriert ist, um aufzuweisen:
einen Klemmkolben (40), der gegen die Klemmscheibe (28) gedrückt ist; und
ein Gehäuse (42, 46), das konfiguriert ist, um den Klemmkolben (40) in einer Klemmrichtung gleitend zu führen und bereitgestellt ist, um an dem Rahmen (10) anbringbar und von diesem abnehmbar zu sein, in einem Zustand, in dem der Klemmkolben (40) innerhalb des Aufnahmelochs (11) aufgenommen ist, wobei ein Betriebsfluid einer Druckkammer (50, 52) zugeführt wird, die zwischen dem Gehäuse und dem Klemmkolben in der Klemmvorrichtung ausgebildet ist,
wobei die Klemmvorrichtung eine hydraulische Klemmvorrichtung (H, H'), die Betriebsöl als das Betriebsfluid verwendet, oder eine pneumatische Klemmvorrichtung (P, P'), die Druckluft als das Betriebsfluid verwendet, ist, und
**dadurch gekennzeichnet, dass** der Rahmen (10) konfiguriert ist, um zu ermöglichen, dass sowohl die hydraulische Klemmvorrichtung als auch die pneumatische Klemmvorrichtung daran angebracht werden können, und sowohl einen Betriebsölzufuhrkanal (32) zum Zuführen des Betriebsöls zu der hydraulischen Klemmvorrichtung als auch einen Druckluftzufuhrkanal (34) zum Zuführen der Druckluft zu der pneumatischen Klemmvorrichtung als einen von dem Betriebsölzufuhrkanal getrennten Zufuhrkanal aufweist.

## Revendications

1. Dispositif d'indexage en rotation (1) pour machine-outil, comprenant:
un bâti (10) ayant un trou de logement (11) formé pour pénétrer à travers lui et configuré pour supporter en rotation un arbre principal (12) à l'intérieur du trou de logement;
un disque de serrage (28) assemblé à l'arbre principal de manière à ne pas pouvoir tourner par rapport à lui; et
un dispositif de serrage configuré pour serrer le disque de serrage en coopération avec le bâti, le dispositif de serrage est configuré pour inclure:
un piston de serrage (40) pressé contre le disque de serrage (28); et
un boîtier (42, 46) configuré pour guider en coulissement le piston de serrage (40) dans une direction de serrage et agencé pour pouvoir être fixé à et détaché du bâti (10) dans un état dans lequel le piston de serrage (40) est logé à l'intérieur du trou de logement (11), un fluide de travail est fourni à une chambre de pression (50, 52) formée entre le boîtier et le piston de serrage dans le dispositif de serrage,
dans lequel le dispositif de serrage est un dispositif de serrage hydraulique (H, H') qui utilise de l'huile de travail comme fluide de travail ou un dispositif de serrage pneumatique (P, P') qui utilise de l'air comprimé comme fluide de travail, et
**caractérisé en ce que** le bâti (10) est configuré pour permettre au dispositif de serrage hydraulique et au dispositif de serrage pneumatique d'être fixés à celui-ci, et inclut un conduit de fourniture d'huile de travail (32) pour fournir l'huile de travail au dispositif de serrage hydraulique et un conduit de fourniture d'air comprimé (34) pour fournir l'air comprimé au dispositif de serrage pneumatique, en tant que conduit de fourniture séparé du conduit de fourniture d'huile de travail.
